# EUROPÄISCHE PATENTSCHRIFT

(11) **EP 2 729 975 B1**
(45) Veröffentlichungstag und Bekanntmachung des Hinweises auf die Patenterteilung: **10.01.2018**
(21) Anmeldenummer: 12722374.1
(22) Anmeldetag: 21.05.2012
(51) Int. Cl.: H01M 2/02

(54) **KNOPFZELLE OHNE BÖRDELUNG**
BUTTON CELL WITHOUT FLANGING
PILE BOUTON SANS SERTISSAGE

(30) Priorität: 04.07.2011 DE 102011078611
(43) Veröffentlichungstag der Anmeldung: 14.05.2014
(73) Patentinhaber: VARTA Microbattery GmbH, 73479 Ellwangen (DE)
(72) Erfinder: BRENNER, Rolf, 73479 Ellwangen (DE)
(74) Vertreter: Patentanwaltskanzlei Cartagena
(86) Internationale Anmeldenummer: PCT/EP2012/059376
(87) Internationale Veröffentlichungsnummer: WO 2013/004429

(56) Entgegenhaltungen:
- DE-A1- 3 247 191
- US-A- 5 846 672

## Beschreibung

Die vorliegende Erfindung betrifft Knopfzellen mit einem flüssigkeitsdicht verschlossenen Gehäuse aus einem Zellenbecher, einem Zellendeckel und einer Dichtung.

Knopfzellen weisen üblicherweise ein Gehäuse aus zwei Gehäusehalbteilen, einem Zellenbecher und einem Zellendeckel, auf. Diese können beispielsweise aus vernickeltem Tiefziehblech als Stanzziehteile hergestellt werden. Gewöhnlich ist der Zellenbecher positiv und der Zellendeckel negativ gepolt. In dem Gehäuse können die verschiedensten elektrochemischen Systeme enthalten sein, beispielsweise Zink/Braunstein, primäre und sekundäre Lithium-Ionen-Systeme oder sekundäre Systeme wie Nickel/Cadmium oder Nickel/Metallhydrid.

Der flüssigkeitsdichte Verschluss von Knopfzellen erfolgt klassisch durch Umbördeln des Randes des Zellenbechers über den Rand des Zellendeckels in Verbindung mit einem Kunststoffring, der zwischen Zellenbecher und Zellendeckel angeordnet ist und der gleichzeitig als Dichtungselement sowie zur elektrischen Isolierung des Zellenbechers und des Zellendeckels dient. Derartige Knopfzellen sind beispielsweise in der DE 31 13 309 A1 beschrieben.

Alternativ ist es auch möglich, Knopfzellen zu fertigen, bei denen Zellenbecher und Zellendeckel in axialer Richtung ausschließlich durch einen Kraftschluss zusammengehalten werden und die entsprechend keinen umgebördelten Becherrand aufweisen. Derartige Knopfzellen sowie ihre Herstellung sind beispielsweise in der WO 2010/089152 A1 sowie in der DE 10 2009 017 514 A1 beschrieben.

In der DE 196 47 593 A1 wird der Einsatz eines Dichtungselementes beschrieben, das durch Tiefziehen aus einer Folie hergestellt wird. Aus einer beheizten Folie wird mittels einer Ziehmatrize und eines Formstempels unter Vakuum ein becherförmiges Formteil gezogen. Als bevorzugtes Folienmaterial werden Polyamide angegeben. Die Verformung erfolgt, abhängig vom gewünschten Durchmesser/Höhenverhältnis, in einem oder mehreren gestuften Arbeitsgängen. Im Bodenbereich des durch Tiefziehen hergestellten becherförmigen Formteils erfolgt anschließend eine Ausstanzung mittels eines Schnittstempels und einer Schnittbuchse. Das so hergestellte Dichtungselement wird auf einen Deckel montiert, der dann in einen Becher eingesetzt werden kann. Da so hergestellte Foliendichtungen nur sehr geringe Dicken aufweisen, sind die resultierenden Knopfzellen kapazitätsoptimiert. Die Verwendung von Foliendichtungen bietet gegenüber dem klassischen Einsatz von Dichtungen aus Spritzgussteilen diesbezüglich klare Vorteile.

In der WO 2007/062838 A1, der EP 0 731 516 A1 und der US 5919586 A sind Gehäusedeckel beschrieben, die einen doppelwandigen Öffnungsrand mit U-förmigem Querschnitt aufweisen, der durch radiales Umbiegen der Schnittkante des Zellendeckels nach außen gebildet wurde. Gehäuse mit solchen Knopfzellendeckeln weisen hervorragende Dichtigkeitseigenschaften und hohe Kapazitäten auf.

Ähnliche Knopfzellen kennt man auch aus der US 2002/0009649 A1 und der JP 08-203497. Auch hier sind Knopfzellendeckel mit doppelwandigem Öffnungsrand mit U-förmigem Querschnitt beschrieben.

Aus der US 5846672 sind Knopfzellen bekannt, die Knopfzellendeckel mit einwandigem Öffnungsrand aufweisen. Knapp unterhalb des Öffnungsrandes ist eine Kerbe in den Mantel des Knopfzellendeckels eingebracht, in die der Öffnungsrand eines Knopfzellenbechers eingreifen kann.

Ein ähnlicher Aufbau eines Knopfzellengehäuses findet sich auch in der DE 3247191 A1. Hier sind einige Gehäusevarianten offenbart, bei denen ein Formschluss nach Art einer Nut-Feder-Verbindung realisiert ist.

Die vorliegend beschriebene Erfindung baut auf dem genannten Stand der Technik auf. Ihr lag die Aufgabe zugrunde, Knopfzellen bereitzustellen, die sich insbesondere durch eine weiter optimierte Kapazität auszeichnen.

Diese Aufgabe wird gelöst durch die Knopfzelle mit den Merkmalen des Anspruchs 1. Bevorzugte Ausführungsformen der erfindungsgemäßen Knopfzelle sind in den abhängigen Ansprüchen 2 bis 6 angegeben. Auch das Verfahren mit den Merkmalen des Anspruchs 7 trägt zur Lösung dieser Aufgabe bei. Der Wortlaut sämtlicher Ansprüche wird hiermit durch Bezugnahme zum Inhalt dieser Beschreibung gemacht.

Die erfindungsgemäße Knopfzelle umfasst ein flüssigkeitsdicht verschlossenes Gehäuse aus einem Zellenbecher, einem Zellendeckel und einer Dichtung. Der Zellenbecher und der Zellendeckel sind über die Dichtung miteinander verbunden. Sie weisen jeweils einen Boden, einen umlaufenden Mantel, einen den Boden und den Mantel verbindenden Übergangsbereich und eine endständige Schnittkante auf.

Der Boden des Zellenbechers und der Boden des Zellendeckels sind bevorzugt jeweils eben und vorzugsweise kreisförmig, gegebenenfalls auch oval, ausgebildet. Der Mantel des Zellenbechers und der Mantel des Zellendeckels lassen sich bevorzugt als ringförmige Segmente eines Hohlzylinders mit kreisförmigem oder ovalem Querschnitt beschreiben. In der Regel sind die Mäntel von Zellenbecher und Zellendeckel orthogonal zu den dazugehörigen Böden ausgerichtet.

Die erwähnten Übergangsbereiche von Zellenbecher und Zellendeckel umfassen bevorzugt die Teile von Zellenbecher und Zellendeckel, die außerhalb der Ebene des jeweiligen Bodens liegen, aber noch nicht Teil des dazugehörigen Mantels sind. Die Übergangsbereiche können abgerundet ausgebildet sein, beispielsweise schulterförmig, oder auch die Form einer scharfen Kante haben.

Zellenbecher und Zellendeckel sind bevorzugt aus metallischen Materialien wie vernickeltem Stahl oder Blech gefertigt. Weiterhin geeignet sind insbesondere auch Trimetalle, beispielsweise mit der Abfolge Nickel, Stahl und Kupfer (von außen nach innen).

Der Zellendeckel der erfindungsgemäßen Knopfzelle ist mit der Schnittkante voraus in den Zellenbecher eingeschoben. Dabei ist die Dichtung zwischen dem Zellenbecher und dem Zellendeckel derart angeordnet, dass sie diese voneinander isoliert.

Bei der Dichtung handelt es sich bevorzugt um eine Foliendichtung, wie sie z.B. in der eingangs erwähnten DE 196 47 593 A1 beschrieben ist. Bevorzugt kommen Foliendichtungen aus einem Thermoplasten zum Einsatz. Als Material eignen sich insbesondere Polyamid oder Polyetheretherketon. Allerdings ist die Erfindung nicht auf solche Dichtungen beschränkt. Grundsätzlich sind auch klassische, insbesondere durch Spritzguss hergestellte Dichtungen, einsetzbar.

Beim Einschieben des Zellendeckels in den Zellenbecher überlappen die Mäntel von Zellendeckel und Zellenbecher und bilden einen umlaufenden Überlappungsbereich aus. Die Größe des Bereiches bzw. das Verhältnis von überlappendem Bereich zu nicht überlappenden Bereichen ist dabei durch die jeweilige Höhe der Mäntel von Zellenbecher und Zellendeckel sowie durch die Tiefe des Einschubs festgelegt.

Der Zellenbecher und der Zellendeckel bilden gemeinsam mit der Dichtung ein Gehäuse aus, in dem die Böden von Zellenbecher und Zellendeckel parallel zueinander angeordnet sind. Der Abstand der Böden definiert die Höhe der Knopfzelle, die Verbindungsgerade durch die Mittelpunkte der Böden die Bezugsachse (axiale Richtung) entlang der bei der Montage der Knopfzelle das Einschieben des Zellendeckels in den Zellenbecher erfolgt.

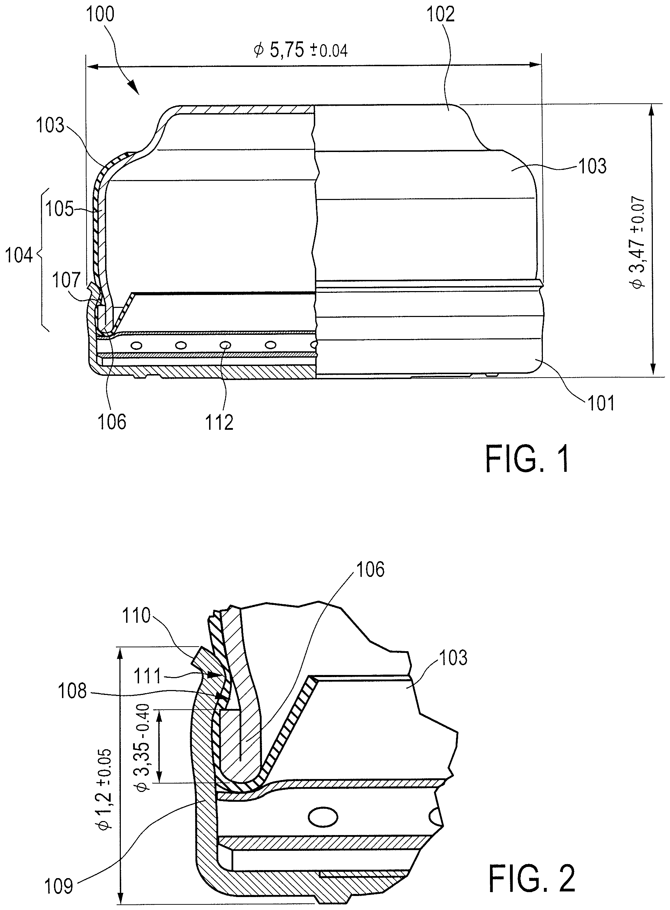

Besonders zeichnet sich eine erfindungsgemäße Knopfzelle dadurch aus, dass der Mantel des Zellendeckels einen einwandigen Abschnitt und einen sich daran anschließenden umlaufenden doppelwandigen Öffnungsrand mit U-förmigem Querschnitt, der durch radiales Umbiegen der Schnittkante des Zellendeckels nach außen gebildet wurde, umfasst. Mit anderen Worten, die erfindungsgemäße Knopfzelle weist einen Knopfzellendeckel auf, wie er grundsätzlich bereits aus den eingangs erwähnten WO 2007/062838 A1, EP 0 731 516 A1 und US 5919586 A bekannt ist. In all diesen Druckschriften sind Zellendeckel beschrieben, bei denen wie beim vorliegend zum Einsatz kommenden Zellendeckel die umgebogene Schnittkante des Zellendeckels an der Außenseite des Zellendeckelmantels anliegt. Die anliegende Schnittkante bildet einen kleinen Absatz oder Vorsprung an der Außenseite des Zellendeckelmantels. Wird der doppelwandige Öffnungsrand mit U-förmigem Querschnitt allerdings radial nach innen eingezogen, wie es z.B. in Fig. 1 oder Fig. 2 der EP 0731516 A1 oder in Fig. 3a oder Fig. 3b der US 5919586 A dargestellt ist, so resultiert der Vorsprung oder Absatz in einer Kerbe, in der der Außendurchmesser des Zellendeckelmantels ein Minimum aufweist.

Auch die erfindungsgemäße Knopfzelle weist einen Zellendeckel mit einer solchen umlaufenden Kerbe auf, die unmittelbar unterhalb des doppelwandigen Öffnungsrandes verläuft und in der der Außendurchmesser des Zellendeckelmantels ein Minimum aufweist. Bevorzugt weist der Außendurchmesser des Mantels des Zellendeckels im Bereich des doppelwandigen Öffnungsrands ein Maximum auf, fällt dann zur Kerbe hin ab und steigt unterhalb der Kerbe wieder an. Oder mit anderen Worten, der Außendurchmesser des Mantels weist in der Kerbe ein Minimum auf und steigt ober- und unterhalb der Kerbe wieder an.

Nicht bekannt ist aus dem genannten Stand der Technik, dass eine solche Kerbe dazu dienen kann, den Zellendeckel im Zellenbecher zu fixieren. Hierzu weist der Mantel des Zellenbechers einer erfindungsgemäßen Knopfzelle eine durch radialen Einzug gebildete umlaufende Nase auf, die in diese Kerbe eingreift. Der Zellenbecher und der Zellendeckel einer erfindungsgemäßen Knopfzelle sind somit in axialer Richtung durch einen Formschluss verbunden, ohne dass es zwingend des eingangs erwähnten klassischen Umbördelns bedarf.

Die Verschlussmontage von Zellenbecher und Zellendeckel lässt sich bei erfindungsgemäßen Knopfzellen sehr viel einfacher bewerkstelligen als bei klassischen. Zur Bildung der erwähnten umlaufenden Nase wird kein aufwendiges Bördelwerkzeug benötigt, sondern nur noch eine konisch verlaufende Einziehbuchse. Beim Einziehen selbst wirken radiale Kräfte auf den Zellendeckel lediglich im Bereich des doppelwandigen Öffnungsrandes mit U-förmigem Querschnitt. In diesem Bereich weist der Zellendeckel eine besonders hohe Stabilität auf, so dass die Wahrscheinlichkeit einer Beschädigung der Zelle bei der Endmontage sehr gering ist.

In besonders bevorzugten Ausführungsformen wird die Nase, die in die Kerbe eingreift, von der radial nach innen eingezogenen Schnittkante des Zellenbechers gebildet. In dieser Ausführungsform weist der Mantel des Zellenbechers nur eine sehr geringe Höhe auf. Damit ist eine große Materialersparnis verbunden. Der radiale Einzug der Schnittkante des Zellenbechers lässt sich beispielsweise mit der bereits erwähnten Einziehbuchse bewerkstelligen. Bevorzugt erfolgt das radiale Einziehen der Schnittkante, nachdem der Zellendeckel in den Zellenbecher eingeschoben wurde.

In einer weiteren Ausführungsform ist es gleichfalls möglich, dass die in die Kerbe eingreifende Nase von einer unterhalb der Schnittkante angeordneten radial umlaufenden Einbuchtung im Mantel des Zellenbechers gebildet wird. In diesem Fall ist der Mantel des Zellenbechers höher als bei der zuvor beschriebenen Ausführungsform. Bevorzugt liegt die über der Einbuchtung liegende Schnittkante auch bei vollständigem Einschub des Zellendeckels in den Zellenbecher an der Außenwand des Zellendeckelmantels, insbesondere im einwandigen Abschnitt, an und ist nicht etwa in den Übergangsbereich des Zellendeckels umgebördelt.

Die radial umlaufende Einbuchtung lässt sich ebenfalls mittels der erwähnten Einziehbuchse bewerkstelligen.

In bevorzugten Ausführungsformen weist der Mantel des Zellenbechers eine Höhe auf, die weniger als 60 %, bevorzugt weniger als 40 %, der Höhe der Knopfzelle beträgt.

Der Außendurchmesser des Mantels des Zellendeckels überschreitet im einwandigen Abschnitt den maximalen Außendurchmesser des Mantels des Zellenbechers üblicherweise nicht, liegt in der Regel darunter.

Die Dichtung umschließt in aller Regel den doppelwandigen Öffnungsrand des Zellendeckels. In bevorzugten Ausführungsformen deckt sie darüber hinaus auch die Außenseite des Mantels des Zellendeckels mindestens teilweise, vorzugsweise vollständig, ab, kann sogar bis in den Übergangsbereich hochgezogen sein.

In bevorzugten Ausführungsformen kann die Dichtung gefärbt sein. Im Falle einer Foliendichtung können beispielsweise ein Farbpigment enthaltende Folien verwendet werden. Die Dichtung kann beispielsweise blau, rot, gelb, grün oder schwarz eingefärbt sein. Auf diese Weise ist es möglich, Knopfzellen farblich zu kennzeichnen, beispielsweise zur Unterscheidung von wiederaufladbaren und nicht wiederaufladbaren Knopfzellen. Für wiederaufladbare Knopfzellen kann beispielsweise eine grüne Folie verwendet werden. Bei herkömmlichen Knopfzellen ist die Dichtung zwischen den Gehäuseteilen Zellenbecher und Zellendeckel nicht oder kaum zu sehen ist. Ganz anders verhält es sich, wenn die Dichtung gemäß der beschriebenen bevorzugten Ausführungsform den Mantel des Zellendeckels mindestens teilweise oder sogar vollständig abdeckt.

Wie bereits erwähnt, ist auch ein Verfahren zur Herstellung einer Knopfzelle Gegenstand der vorliegenden Erfindung. Bei dem Verfahren kommen Zellenbecher, Zellendeckel und Dichtungen zum Einsatz, wie sie oben beschrieben sind.

Bei dem Verfahren wird in einem Schritt eine Dichtung auf den Mantel eines Zellendeckels aufgebracht. Dieser umfasst, wie oben beschrieben, neben dem erwähnten einwandigen Abschnitt und dem sich daran anschließenden umlaufenden doppelwandigen Öffnungsrand mit U-förmigem Querschnitt unterhalb desselben eine umlaufende Kerbe, in der sein Außendurchmesser ein Minimum aufweist. In einem weiteren Schritt wird der Zellendeckel mit der aufgebrachten Dichtung mit der Schnittkante voran in einen Zellenbecher eingeschoben, wobei der Mantel des Zellenbechers eine durch radialen Einzug gebildete umlaufende Nase aufweist, die beim Einschieben des Zellendeckels in den Zellenbecher in diese Kerbe eingreift. Alternativ kann diese Nase auch nach dem Einschieben des Zellendeckels in den Zellenbecher durch radialen Einzug gebildet werden.

Bei der erfindungsgemäßen Knopfzelle handelt es sich bevorzugt um eine Zink-/Luft-Knopfzelle. Alternativ kann es sich bei der Zelle beispielsweise aber auch um eine Nickel/Metallhydrid-Zelle oder eine Lithium-Zelle handeln.

Weitere Merkmale der Erfindung ergeben sich aus der nachfolgenden Beschreibung bevorzugter Ausführungsformen. Es sei an dieser Stelle explizit betont, dass sämtliche in der vorliegenden Anmeldung beschriebenen fakultativen Aspekte der erfindungsgemäßen Vorrichtung jeweils für sich allein oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

### Figurenbeschreibung

**Fig. 1** zeigt eine teilgeschnittene Darstellung einer erfindungsgemäßen Knopfzelle **100.** Diese umfasst ein Gehäuse aus dem Zellenbecher **101,** dem Zellendeckel **102** und der Dichtung **103.** Der Zellendeckel weist einen Mantel **104** auf, der sich in einen einwandigen Abschnitt **105** und einen sich daran anschließenden umlaufenden doppelwandigen Öffnungsrand mit U-förmigem Querschnitt **106** unterteilt. Letzterer wurde durch radiales Umbiegen der Schnittkante **107** nach außen gebildet.

Klar zu erkennen ist, dass der doppelwandige Öffnungsrand mit U-förmigem Querschnitt **106** radial nach innen eingezogen ist, so dass der Außendurchmesser des Mantels **104** im Bereich des doppelwandigen Öffnungsrandes **106** den Außendurchmesser des Mantels im einwandigen Bereich **105** nicht überschreitet. Als Resultat des Einzugs weist der Mantel **104** unmittelbar unterhalb des doppelwandigen Öffnungsrandes **106** eine Kerbe **108** auf, in der der Außendurchmesser des Zellendeckelmantels **104** ein Minimum aufweist. Diese Kerbe **108** kann dazu genutzt werden, den Zellenbecher **101** und den Zellendeckel **102** formschlüssig miteinander zu verbinden.

Die Dichtung **106** umschließt den doppelwandigen Öffnungsrand **106** des Zellendeckels. Weiterhin deckt sie auch die Außenseite des Mantels **104,** insbesondere auch den kompletten einwandigen Abschnitt **105** des Zellendeckels vollständig ab. Sie ist bis in den schulterartig ausgebildeten Übergangsbereich zwischen dem Mantel und dem Boden des Zellendeckels hochgezogen.

**Fig. 2** zeigt eine ausschnittsweise Vergrößerung des geschnittenen Bereichs in Fig. 1. Gut zu erkennen ist die Kerbe **108,** die unterhalb der Schnittkante **107** verläuft. In diese Kerbe greift die Einbuchtung **111** ein. Gebildet ist die Einbuchtung **111** durch radialen Einzug des doppelwandigen Öffnungsrandes **106.** Die Schnittkante **110** des Zellenbechers **101** selbst ist radial nach außen umgebogen.

Bei der dargestellten Knopfzelle **100** handelt es sich um eine Zink-Luft-Knopfzelle. In den Zellenbecher **101** eingelegt ist die Luftkathode **112.** Der Übersichtlichkeit wegen nicht dargestellt ist die Zinkanode, die üblicherweise das Gehäuse oberhalb der Luftkathode (getrennt von dieser durch einen Separator) im Wesentlichen vollständig ausfüllt.

## Patentansprüche

1. Knopfzelle umfassend ein flüssigkeitsdicht verschlossenes Gehäuse aus
- einem Zellenbecher, der einen Boden, einen umlaufenden Mantel, einen den Boden und den Mantel verbindenden Übergangsbereich und eine endständige Schnittkante aufweist,
- einem Zellendeckel, der einen Boden, einen umlaufenden Mantel, einen den Boden und den Mantel verbindenden Übergangsbereich und eine endständige Schnittkante aufweist, und
- einer Dichtung,
wobei der Zellendeckel mit der Schnittkante voraus in den Zellenbecher eingeschoben ist und die Dichtung zwischen dem Zellenbecher und dem Zellendeckel derart angeordnet ist, dass sie diese voneinander isoliert,
**dadurch gekennzeichnet, dass**
- sich der Mantel des Zellendeckels in einen einwandigen Abschnitt und einen sich daran anschließenden umlaufenden doppelwandigen Öffnungsrand mit U-förmigem Querschnitt unterteilt, der durch radiales Umbiegen der Schnittkante des Zellendeckels nach außen gebildet wurde,
- der Mantel des Zellendeckels unmittelbar unterhalb des umlaufenden doppelwandigen Öffnungsrandes eine umlaufende Kerbe aufweist, in der sein Außendurchmesser ein Minimum aufweist und
- der Mantel des Zellenbechers eine durch radialen Einzug gebildete umlaufende Nase aufweist, die in diese umlaufende Kerbe eingreift.

2. Knopfzelle nach Anspruch 1, **dadurch gekennzeichnet, dass** die Nase von der radial nach innen eingezogenen Schnittkante des Zellenbechers gebildet wird.

3. Knopfzelle nach Anspruch 1, **dadurch gekennzeichnet, dass** die Nase von einer unterhalb der Schnittkante angeordneten radial umlaufenden Einbuchtung im Mantel des Zellenbechers gebildet wird.

4. Knopfzelle nach einem der vorhergehenden Ansprüche, **dadurch gekennzeichnet, dass** der Mantel des Zellenbechers eine Höhe aufweist, die weniger als 60 %, bevorzugt weniger als 40 %, der Höhe der Knopfzelle beträgt.

5. Knopfzelle nach einem der vorhergehenden Ansprüche, **dadurch gekennzeichnet, dass** der Außendurchmesser des Mantel des Zellendeckels im einwandigen Abschnitt den maximalen Außendurchmesser des Mantels des Zellenbechers nicht überschreitet.

6. Knopfzelle nach einem der vorhergehenden Ansprüche, **dadurch gekennzeichnet, dass** die Dichtung die Außenseite des Mantels des Zellendeckels vollständig abdeckt.

7. Verfahren zur Herstellung einer Knopfzelle, insbesondere einer Knopfzelle nach einem der vorhergehenden Ansprüche, wobei das Gehäuse der Knopfzelle aus
- einem Zellenbecher, der einen Boden, einen umlaufenden Mantel, einen den Boden und den Mantel verbindenden Übergangsbereich und eine endständige Schnittkante aufweist,
- einem Zellendeckel, der einen Boden, einen umlaufenden Mantel, einen den Boden und den Mantel verbindenden Übergangsbereich und eine endständige Schnittkante aufweist, und
- einer Dichtung,
gebildet wird, indem die Dichtung auf den Mantel des Zellendeckels aufgebracht und dieser anschließend mit der Schnittkante voraus in den Zellenbecher eingeschoben wird,
**dadurch gekennzeichnet, dass**
- der Mantel des Zellendeckels einen einwandigen Abschnitt und einen sich daran anschließenden umlaufenden doppelwandigen Öffnungsrand mit U-förmigem Querschnitt aufweist, der durch radiales Umbiegen der Schnittkante des Zellendeckels nach außen gebildet wurde, sowie unmittelbar unterhalb des doppelwandigen Öffnungsrandes eine umlaufende Kerbe, in der sein Außendurchmesser ein Minimum aufweist und
- der Mantel des Zellenbechers eine durch radialen Einzug gebildete umlaufende Nase aufweist, die beim Einschieben des Zellendeckels in den Zellenbecher in diese Kerbe eingreift oder eine solche Nase nach dem Einschieben des Zellendeckels in den Zellenbecher durch radialen Einzug gebildet wird.

## Claims

1. Button cell comprising a leaktightly sealed case consisting of
- a cell cup which has a base, a circumferential sleeve, a transition region joining the base and the sleeve, and a cut edge at the end,
- a cell cover which has a base, a circumferential sleeve, a transition region joining the base and the sleeve, and a cut edge at the end and
- a seal,
wherein the cell cover is pushed with the cut edge foremost into the cell cup, and the seal between the cell cup and the cell cover is arranged in such a way that it isolates them from each other,
**characterized in that**
- the sleeve of the cell cover is divided into a single-walled section and an adjoining circumferential double-walled opening edge with a U-shaped cross-section which was formed by bending the cut edge of the cell cover radially outward,
- the sleeve of the cell cover has a circumferential notch, directly below the circumferential double-walled opening edge, in which its external diameter has a minimum value, and
- the sleeve of the cell cup has a circumferential protuberance, formed by radial drawing-in, which engages in this circumferential notch.

2. Button cell according to Claim 1, **characterized in that** the protuberance is formed by the radially inward drawn-in cut edge of the cell cup.

3. Button cell according to Claim 1, **characterized in that** the protuberance is formed by a radial circumferential indentation, arranged below the cut edge, in the sleeve of the cell cup.

4. Button cell according to one of the preceding claims, **characterized in that** the sleeve of the cell cup has a height which is less than 60%, preferably less than 40%, of the height of the button cell.

5. Button cell according to one of the preceding claims, **characterized in that** the external diameter of the sleeve of the cell cover in the single-walled section does not exceed the maximum external diameter of the sleeve of the cell cup.

6. Button cell according to one of the preceding claims, **characterized in that** the seal completely covers the outside of the sleeve of the cell cover.

7. Method for producing a button cell, in particular a button cell according to one of the preceding claims, wherein the case of the button cell is formed from
- a cell cup which has a base, a circumferential sleeve, a transition region joining the base and the sleeve, and a cut edge at the end,
- a cell cover which has a base, a circumferential sleeve, a transition region joining the base and the sleeve, and a cut edge at the end, and a seal,
by the seal being applied to the sleeve of the cell cover and then pushed with the cut edge foremost into the cell cup,
**characterized in that**
- the sleeve of the cell cover has a single-walled section and an adjoining circumferential double-walled opening edge with a U-shaped cross-section which was formed by radially bending the cut edge of the cell cover outward, and, directly below the double-walled opening edge, a circumferential edge in which its external diameter has a minimum value, and
- the sleeve of the cell cup has a circumferential protuberance, formed by radial drawing-in, which engages in this notch when the cell cover is pushed into the cell cup, or such a protuberance is formed by radial drawing-in after the cell cover has ben pushed into the cell cup.

## Revendications

1. Pile bouton comprenant un boîtier fermé de manière étanche aux liquides, constituée
- d'un godet à pile qui présente un fond, une enveloppe périphérique, une zone de transition reliant le fond et l'enveloppe et un bord franc terminal,
- un couvercle de pile, qui présente un fond, une enveloppe périphérique, une zone de transition reliant le fond et l'enveloppe et un bord franc terminal, et
- un joint d'étanchéité,
le couvercle de pile étant enfoncé avec le bord franc en avant dans le godet à pile, et le joint d'étanchéité étant disposé entre le godet à pile et le couvercle de pile de telle sorte qu'il isole ceux-ci l'un de l'autre,
**caractérisée en ce que**
- l'enveloppe du couvercle de pile est divisée en une partie à une paroi et un bord d'ouverture périphérique de section transversale en forme de U à double paroi se raccordant à celle-ci, qui été formé en repliant radialement le bord franc du couvercle de pile vers l'extérieur,
- l'enveloppe du couvercle de pile présente, directement en dessous du bord d'ouverture périphérique à double paroi, une encoche périphérique dans laquelle son diamètre extérieur est minimal et
- l'enveloppe du godet de pile présente un nez périphérique formé par renfoncement radial, qui s'engage dans cette encoche périphérique.

2. Pile bouton selon la revendication 1, **caractérisée en ce que** le nez est formé par le bord franc du godet à pile renfoncé radialement vers l'intérieur.

3. Pile bouton selon la revendication 1, **caractérisée en ce que** le nez est formé par un renfoncement périphérique radial dans l'enveloppe du godet de pile, disposé en dessous du bord franc.

4. Pile bouton selon l'une quelconque des revendications précédentes, **caractérisée en ce que** l'enveloppe du godet de pile présente une hauteur qui est inférieure à 60 %, de préférence inférieure à 40 %, de la hauteur de la pile bouton.

5. Pile bouton selon l'une quelconque des revendications précédentes, **caractérisée en ce que** le diamètre extérieur de l'enveloppe du couvercle de pile dans la portion à paroi unique ne dépasse pas le diamètre extérieur maximum de l'enveloppe du godet de pile.

6. Pile bouton selon l'une quelconque des revendications précédentes, **caractérisée en ce que** le joint d'étanchéité recouvre complètement le côté extérieur de l'enveloppe du couvercle de pile.

7. Procédé de fabrication d'une pile bouton, en particulier d'une pile bouton selon l'une quelconque des revendications précédentes, dans lequel le boîtier de la pile bouton est formé
- d'un godet de pile qui présente un fond, une enveloppe périphérique, une zone de transition reliant le fond et l'enveloppe, et un bord franc terminal,
- un couvercle de pile, qui présente un fond, une enveloppe périphérique, une zone de transition reliant le fond et l'enveloppe, et un bord franc terminal, et
- un joint d'étanchéité,
le joint d'étanchéité étant appliqué sur l'enveloppe du couvercle de pile et celui-ci étant ensuite enfoncé avec le bord franc en avant dans le godet de pile,
**caractérisé en ce que**
- l'enveloppe du couvercle de pile présente une partie à une paroi et un bord d'ouverture périphérique de section transversale en forme de U à double paroi se raccordant à celle-ci, qui été formé en repliant radialement le bord franc du couvercle de pile vers l'extérieur, et, directement en dessous du bord d'ouverture à double paroi, une encoche périphérique, dans laquelle son diamètre extérieur est minimal et
- l'enveloppe du godet de pile présente un nez périphérique formé par renfoncement radial, qui s'engage dans cette encoche lors de l'enfoncement du couvercle de pile dans le godet de pile ou un tel nez est formé par renfoncement radial après l'enfoncement du couvercle de pile dans le godet de pile.
